# EUROPEAN PATENT SPECIFICATION

(11) **EP 1 321 637 B1**
(45) Date of publication and mention of the grant of the patent: **15.12.2004**
(21) Application number: 01850215.3
(22) Date of filing: 21.12.2001
(51) Int. Cl.: F01M 13/00, F01M 11/03, B01D 35/00

(54) **Motor vehicle engine with oil filter housing**
Kraftfahrzeug mit Oelfiltergehäuse
Vehicule avec boitier pour filtre d'huile

(43) Date of publication of application: 25.06.2003
(73) Proprietor: Ford Global Technologies, LLC, Dearborn, MI 48126 (US)
(72) Inventor: Sällström, Göran, S-29060 Kyrkhult (SE); Taylor, Brian, BN44 3WD (GB)
(74) Representative: Hellbom, Lars Olof

(56) References cited:
- EP-A- 0 269 054
- JP-A- 2000 274 222
- US-A- 4 977 870
- US-A- 5 078 106
- US-B1- 6 267 094

## Description

The present invention relates to a motor vehicle engine having an oil filter housing pivotally mounted externally of said engine.

For ease of changing the oil filter, the oil filter housing is built outside the engine and has a cover which can be screwed off to enable the oil filter thereinside to be replaced when the filter becomes clogged and less effective. At least part of the oil filter housing must be obliquely mounted protruding away from the engine and its manifolds, generator, starter etc. so that its cover can be gripped, unscrewed and removed for replacement of the oil filter. A protected vertical disposition of the oil filter, surrounded by other engine components such as the exhaust manifold, generator etc., is impossible if the oil filter is to be accessible. But in a collision, when the crumpling front end of the car impacts horizontally against the engine, the obliquely mounted, protruding oil filter housing may easily be broken off, spilling not only the oil in the filter, but allowing the pressure generated during ordinary operation by the oil circulation pump to force oil out of the broken conduit from the oil sump and spilling into the engine compartment or into the environment.

One solution to this problem is to mount the oil filter housing in a protected location, beside the engine block, preferably just beneath the exhaust or intake manifold. This is the solution described in EP 269 054, wherein the oil filter housing is mounted for operation under the manifold in vertical position. In this position it is not possible to access the holder for replacing the filter. For filter replacement, the holder is made pivotable, and after releasing anchoring screws the oil filter holder can be tilted out and the cover can be unscrewed and the filter replaced.

The solution of EP 269 054 requires the screw anchors to be removed, and the oil filter housing to be tilted out every time the oil filter is to be changed.

In developing the present invention it was realized that the same protective positioning in a collision could be achieved while still retaining the ease of access for oil filter replacement which the tilted-out disposition affords, by making oil filter housing pivotable between an accessible normal operating position, tilted-out relative to the engine and a relatively protected crash-induced retracted position, typically under the exhaust or intake manifold and, for a transverse engine, between protruding engine components mounted laterally relative to the engine. The impact of the crash and the crumpling of the car will tilt the oil filter into its crash protected position without breaking it off.

The oil filter housing is suitably disposed so that substantially horizontal crash forces impacting on the normally obliquely mounted (tilted-out) oil filter housing will pivot it up to a crash protected vertical position, without the housing or its conduits being broken.

The invention will suitably be applied to an oil filter housing mounted on the side of a transverse engine, or at the end of a longitudinal engine, i.e. preferably between the engine block and the front grill of the vehicle.

According to a further advantageous embodiment of the invention, the inflow conduit for pumping oil into the housing during normal operation is disposed coaxially to the pivot axis of the housing.

According to further advantageous embodiments of the invention the inflow to and the outflow from the oil filter housing can be arranged through its pivotal mounting in such a way that the inflow and/or outflow is cut off when the oil filter housing is forced up to its retracted position by the impact of a crash, thereby providing fail-safe protection against oil leakage.

According to a further advantageous embodiment, the normal oil outflow conduit to the engine gallery is arranged, when the oil filter housing is forced to its upright position in a crash, to be in communication to the shunt conduit to the engine sump, thereby rapidly draining the housing of oil to the sump.

The invention will now be described with reference to a number of nonlimiting examples, illustrated in the accompanying figures of which,
Fig. 1(a) shows partially in cross section a transverse engine with an oil filter housing mounted in accordance with the invention,
Fig. 1(b) shows, on a larger scale without the oil filter housing, one embodiment of the pivotal mounting of the oil filter housing of Fig. 1(a),
Fig. 1(c) shows another embodiment of the pivotal mounting for shunting oil to the sump,
Fig. 2 shows purely schematically in a sectional view the arrangement of the oil filter housing and the mounting with conduits,
Fig. 3 shows another embodiment with the oil filter housing mounted at the front end of a longitudinally mounted engine, and
Fig. 4 shows in partially cut-away view a further embodiment where the oil filter housing is mounted adjacent to an Integrated Starter Generator (ISG) unit.

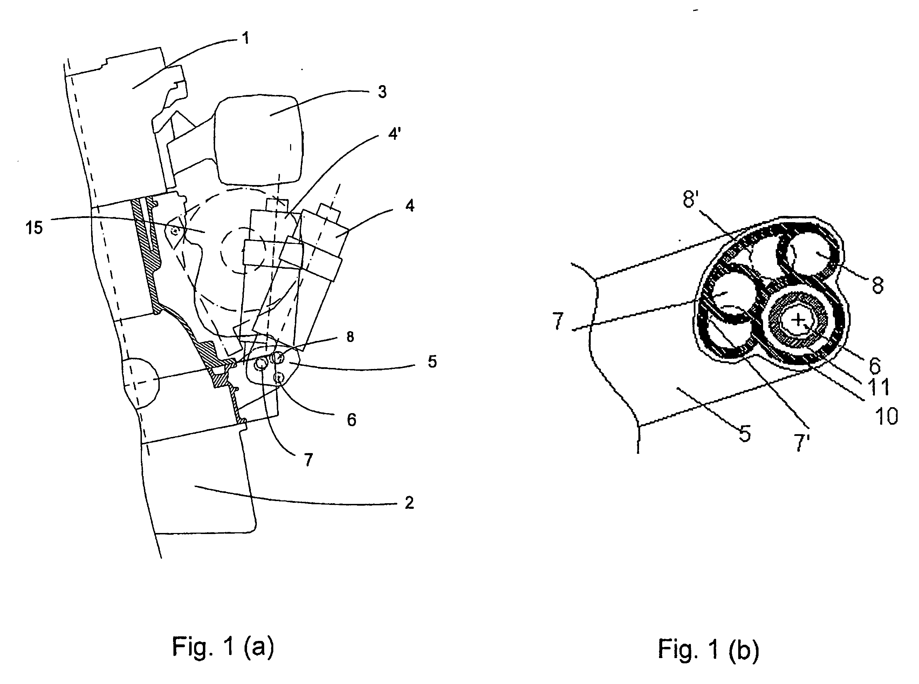

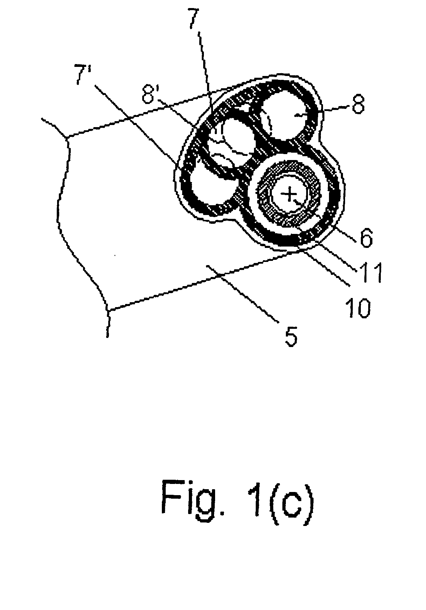

Fig. 1(a) shows in cross section approximately one half of an engine block 1 with an oil filter housing 4 mounted thereon. In its normal mounted position, the oil filter housing is tilted out slightly from the motor, making it accessible for manual removal of the cap and replacement of the oil filter. The oil filter housing 4 is mounted securely in place with a single hollow bolt 6, which also serves as an inflow conduit for oil being pumped into the oil filter housing from the sump.

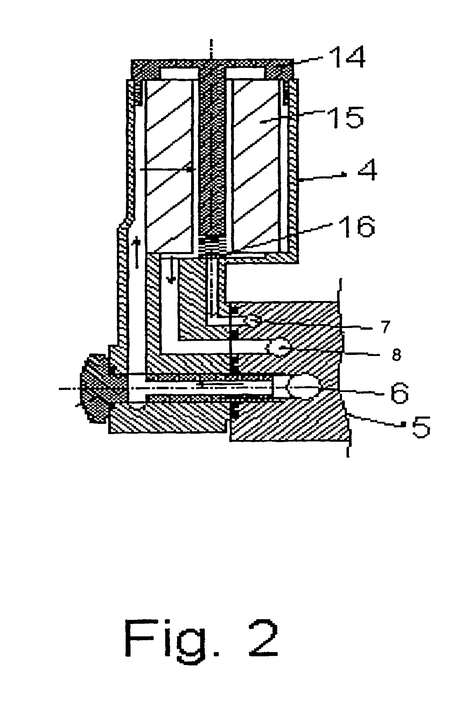

As can be seen in Fig. 1(b), which shows the mounting 5 of the oil filter housing without the oil filter, there is an oil inlet 6, surrounded by a gasket 11, for oil coming under pressure to the oil filter housing from a pump (not shown) in the engine oil sump 2. The oil outlet 8 from the oil filter housing leads to the various parts of the engine. A second gasket 10 seals against the oil filter housing 4. There is also an oil shunt 7 to the sump the normal function of which is most clearly shown in Fig. 2.

Referring to Fig. 2, which shows a sectional view, showing purely schematically, the coupling configuration in the normal operating pre-crash position for of all the embodiments of the oil filter housing according to the present invention. There is shown in Fig. 2 the entire oil filter housing 4 containing the oil filter 15 and closed with a screw cap 14. During normal engine operation oil flows from the pump in the engine sump through the hollow bolt 6 into the housing itself, passes through the filter and exits through the outlet 8 to the various points of lubrication in the engine. When the oil filter is to be manually replaced, the cap 14 is unscrewed and lifted off whereupon a central pin on the cap is removed from a spring valve 16, which then opens up, in a manner known per se, communication between the oil filter housing and the shunt outlet 7, thereby draining the oil rapidly back to the engine sump. This prevent spillage of oil when the filter is replaced.

Returning to Fig. 1(b), the positions of the shunt conduit and the oil outlet to the engine gallery, when the oil filter is in its normal tilted-out disposition are labeled 7 and 8 respectively. The intended positions of the oil shunt outlet and engine gallery outlet after a frontal collision, as a result of which the oil filter housing is pivoted up to its upright position, are indicated by dashed lines and are labeled 7' and 8' respectively. In this embodiment it can be seen that there will be almost no communication between the oil filter housing and the engine gallery and shunt outlets.

A similar mounting configuration is shown in the embodiment of Fig. 1 (c), in which components corresponding to those in the embodiment of Fig. 1(b) have been given the same reference numerals. In the embodiment of Fig. 1(c) however the gallery outlet 8 and the shunt outlet 7 are arranged closer to each other than in the previous embodiment. In a crash, when the oil filter housing is forced to its upright position, the position of the oil filter gallery outlet 8' will overlap the shunt outlet 7, thereby rapidly draining oil from the oil filter housing directly to the engine sump, which can be advantageous should there be a leak in the oil filter housing because of the crash.

In a transverse engine as shown in Fig. 1(a) the oil filter 4 is mounted tilted forward towards the grill of the vehicle, making it accessible for easy manual replacement of the oil filter, but at the same time vulnerable to impact if there is a frontal collision. In such a frontal collision the grill of the vehicle, as the front of the vehicle crumples, will typically first strike the protruding upper end of the oil filter 4 and press it inwards, pivoting it around the mounting screw 6 (which also serves as an oil inlet) until it reaches its retracted position 4' in which the oil filter is nestled amongst the exterior engine components such as the intake manifold 3 and the generator 15. At this stage, the crash impact will be taken up by these surrounding components as well, thereby hopefully avoiding major damage to the oil filter housing and spillage of oil. The invention thus provides both accessibility and crash protection for the oil filter housing.

It is possible in an optional embodiment to provide, by a suitable arrangement of the hollow bolt 6, an automatic cut-off of the oil supply from the sump pump when the oil filter housing is forced into its retracted position, as a further safeguard against the situation in a crash where pump pressure may force oil into a leaking or broken oil circuit.

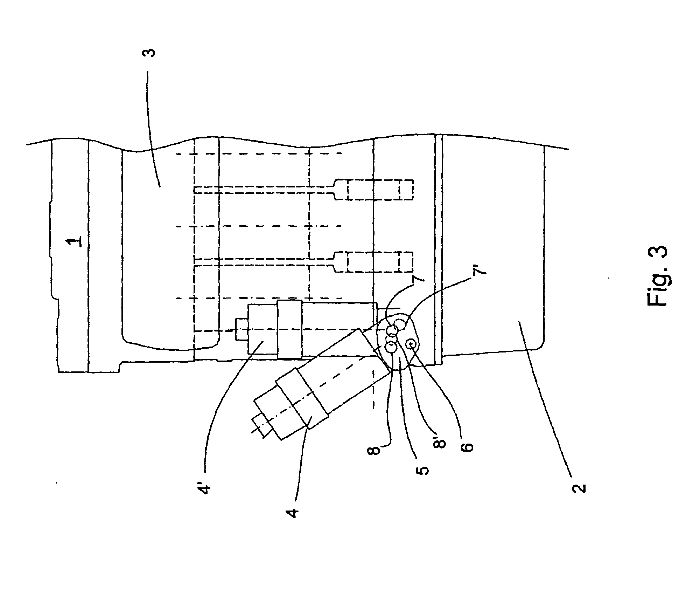

The invention is equally applicable to a longitudinal engine as is illustrated in the embodiment of Fig. 3, in which corresponding items have been given the same reference numerals as in the embodiments of Figs 1(a),(b) &(c). In Fig. 3 we see the oil filter 4 accessibly obliquely mounted at the front end of the engine. Frontal horizontal impact in a crash will forcibly pivot the housing to an upright protected position in which the further impact in the crumple zone is absorbed by the surrounding engine components as well.

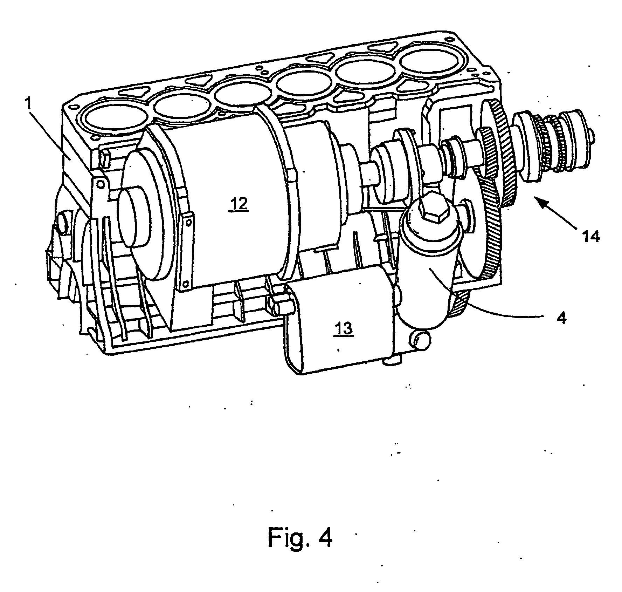

Fig. 4 shows a transverse engine configuration similar to the embodiment shown in Figs. 1(a),(b) & (c). In this case, the oil filter housing 4 is shown in its tilted-out accessible mounting position coupled to an oil cooler unit 13. The oil filter housing is mounted adjacent to an Integrated Starter Generator (ISG) unit 12. When forced to its upright position in a crash, the oil filter housing will be relatively protected by the ISG unit and its gear set housing 14.

## Claims

1. Motor vehicle engine having an oil filter housing pivotally mounted externally of said engine (1), **characterized in that** said oil filter housing is pivotable between an accessible normal operating position (4), tilted-out relative to the engine and a relatively protected crash-induced retracted position (4').

2. Motor vehicle engine according to Claim 1, **characterized in that** said relatively protected retracted position (4') is a substantially vertical position inducible by substantially horizontal crash forces impacting on said oil filter housing in its normal tilted-out operating position (4).

3. Motor vehicle engine according to Claim 1 or 2, **characterized in that** it is a transverse engine with the oil filter housing mounted on one side of the engine.

4. Motor vehicle engine according to Claim 1 or 2, **characterized in that** it is a longitudinal engine with the oil filter housing mounted at one end thereof.

5. Motor vehicle engine according to Claim 1 or 2, **characterized by** an oil drainage shunt conduit (7) adapted for draining oil from the oil filter housing directly to the engine oil sump (2).

6. Motor vehicle engine according to one of the preceding claims, **characterized in that** an oil inflow conduit (6) is arranged coaxial to the pivot axis of said oil filter housing (4).

7. Motor vehicle engine according to one of the preceding claims, **characterized in that** the mounting of the oil filter housing is disposed to cut off oil flow to said oil filter housing when the housing is pivoted to its retracted position.

8. Motor vehicle engine according to one of the preceding claims, **characterized in that** the mounting (5) of the oil filter housing is disposed to cut off oil flow from said oil filter housing when the housing is pivoted to its retracted position (4').

9. Motor vehicle engine according to one of the preceding claims, **characterized in that** the mounting (5) of the oil filter housing is disposed open oil flow from said oil filter housing via said oil drainage shunt conduit (7) to the engine oil sump (2) when the housing is pivoted to its retracted position (4').

## Patentansprüche

1. Kraftfahrzeugmotor mit einem Ölfiltergehäuse, das schwenkbar außerhalb des Motors (1) angebracht ist, **dadurch gekennzeichnet, dass** das Ölfiltergehäuse zwischen einer zugänglichen normalen Betriebsstellung (4), die relativ von dem Motor weg geneigt ist und einer relativ geschützten, durch einen Aufprall herbeigeführten, eingezogenen Stellung (4') schwenkbar ist.

2. Kraftfahrzeugmotor nach Anspruch 1, **dadurch gekennzeichnet, dass** die relativ geschützte eingezogene Stellung (4') eine im Wesentlichen senkrechte Stellung ist, die durch im Wesentlichen waagerechte Aufprallkräfte, die auf das Ölfiltergehäuse in seiner normalen, weg geneigten Betriebsstellung (4) einwirken, herbeiführbar ist.

3. Kraftfahrzeugmotor nach Anspruch 1 oder 2, **dadurch gekennzeichnet, dass** er ein quer angeordneter Motor ist, bei dem das Ölfiltergehäuse auf einer Seite des Motors angebracht ist.

4. Kraftfahrzeugmotor nach Anspruch 1 oder 2, **dadurch gekennzeichnet, dass** er ein längs angeordneter Motor ist, bei dem das Ölfiltergehäuse an einem Ende davon angebracht ist.

5. Kraftfahrzeugmotor nach Anspruch 1 oder 2, **gekennzeichnet durch** eine Öl-Ablass-Nebenleitung (7), die zum Ablassen von Öl von dem Ölfiltergehäuse direkt zu dem Motorölsumpf (2) geeignet ist.

6. Kraftfahrzeugmotor nach einem der vorstehenden Ansprüche, **dadurch gekennzeichnet, dass** ein Ölzuflusskanal (6) koaxial zu der Schwenkachse des Ölfiltergehäuses (4) angeordnet ist.

7. Kraftfahrzeugmotor nach einem der vorstehenden Ansprüche, **dadurch gekennzeichnet, dass** die Halterung des Ölfiltergehäuses bereit ist, einen Ölfluss zu dem Ölfiltergehäuse zu unterbrechen, wenn das Gehäuse in seine eingezogene Stellung geschwenkt ist.

8. Kraftfahrzeugmotor nach einem der vorstehenden Ansprüche, **dadurch gekennzeichnet, dass** die Halterung (5) des Ölfiltergehäuses bereit ist, einen Ölfluss von dem Ölfiltergehäuse zu unterbrechen, wenn das Gehäuse in seine eingezogene Stellung (4') geschwenkt ist.

9. Kraftfahrzeugmotor nach einem der vorstehenden Ansprüche, **dadurch gekennzeichnet, dass** die Halterung (5) des Ölfiltergehäuses bereit ist, einen Ölfluss von dem Ölfiltergehäuse über die Öl-Ablass-Nebenleitung (7) zu dem Motorölsumpf (2) zu öffnen, wenn das Gehäuse in seine eingezogene Stellung (4') geschwenkt ist.

## Revendications

1. Un moteur de véhicule motorisé présentant un boîtier de filtre à huile monté de manière pivotante à l'extérieur dudit moteur (1), **caractérisé en ce que** ledit boîtier de filtre à huile est pivotable entre une position de fonctionnement normale accessible (4), inclinée vers l'extérieur par rapport au moteur et une position rétractée (4'), relativement protégée, provoquée par un choc.

2. Un moteur de véhicule motorisé selon la revendication 1, **caractérisé en ce que** ladite position rétractée relativement protégée (4') est une position substantiellement verticale inductible par des forces de choc impactant sur ledit boîtier de filtre à huile dans sa position de fonctionnement inclinée normale (4).

3. Un moteur de véhicule motorisé selon la revendication 1 ou 2, **caractérisé en ce qu'**il est un moteur transversal avec le boîtier de filtre à huile monté sur un côté du moteur.

4. Un moteur de véhicule motorisé selon la revendication 1 ou 2, **caractérisé en ce qu'**il est un moteur longitudinal avec le boîtier de filtre à huile monté à une de ses extrémités.

5. Un moteur de véhicule motorisé selon la revendication 1 ou 2, **caractérisé par** un conduit dérivé de vidange d'huile (7) adapté pour la vidange d'huile à partir du boîtier de filtre à huile directement vers le carter d'huile du moteur (2).

6. Un moteur de véhicule motorisé selon l'une des revendications précédentes, **caractérisé en ce qu'**un conduit d'entrée d'huile (6) est aménagé coaxialement par rapport à l'axe de pivot dudit boîtier de filtre à huile (4).

7. Un moteur de véhicule motorisé selon l'une des revendications précédentes, **caractérisé en ce que** le montage du boîtier de filtre à huile est disposé afin de couper le débit d'huile vers ledit boîtier de filtre à huile lorsque le boîtier est pivoté vers sa position rétractée.

8. Un moteur de véhicule motorisé selon l'une des revendications précédentes, **caractérisé en ce que** le montage (5) du boîtier de filtre à huile est disposé afin de couper le débit d'huile à partir dudit boîtier de filtre à huile lorsque le boîtier est pivoté vers sa position rétractée (4').

9. Un moteur de véhicule motorisé selon l'une des revendications précédentes, **caractérisé en ce que** le montage (5) du boîtier de filtre à huile est disposé afin d'ouvrir le débit d'huile à partir dudit boîtier de filtre à huile via ledit conduit dérivé de vidange d'huile (7) vers le carter d'huile du moteur (2) lorsque le boîtier est pivoté vers sa position rétractée (4').
